# EUROPÄISCHE PATENTSCHRIFT

(11) **EP 4 431 837 B1**
(45) Veröffentlichungstag und Bekanntmachung des Hinweises auf die Patenterteilung: **06.05.2026**
(21) Anmeldenummer: 23161928.9
(22) Anmeldetag: 14.03.2023
(51) Int. Cl.: F24S 25/33, F24S 25/632, F24S 25/634, F24S 25/00, F24S 25/70, F24S 20/66, E04F 13/08, H02S 20/22, F24S 25/60

(54) **KLEMMANORDNUNG UND MONTAGEANORDNUNG FÜR EIN SOLARZELLENMODUL**
CLAMP ASSEMBLY AND MOUNTING ASSEMBLY FOR A SOLAR CELL MODULE
ENSEMBLE DE SERRAGE ET ENSEMBLE DE MONTAGE POUR MODULE DE CELLULE SOLAIRE

(43) Veröffentlichungstag der Anmeldung: 18.09.2024
(73) Patentinhaber: SFS Group International AG, 9435 Heerbrugg (CH)
(72) Erfinder: Sameien, Terje, Auli (NO)

(56) Entgegenhaltungen:
- CN-U- 207 766 212
- DE-A1- 102011 084 213
- DE-U1- 9 308 171
- US-A1- 2014 026 946
- US-A1- 2015 122 311
- US-A1- 2019 178 274

## Beschreibung

Die vorliegende Erfindung befasst sich mit einer Klemmanordnung für ein Solarmodul. Mit Klemmanordnung ist dabei eine Baugruppe gemeint, die dazu ausgelegt und geeignet ist, ein Solarmodul oder ein anderes, plattenförmiges Bauteil vergleichbarer Dimension klemmend sicher zu halten. Eine Montageanordnung umfasst weitergehend eine Tragschiene zur Befestigung an einer Unterkonstruktion und die Klemmordnung für das Solarzellenmodul, die zusammen in die Tragschiene eingehängt werden.

### HINTERGRUND

Mit Solarzellenpaneel, Solarmodul, Solarpaneel oder Solarzellenmodul sei im Folgenden eine flächige Anordnung von einer Vielzahl miteinander verschalteter Solarzellen gemeint. Solche Solarmodule sind üblicherweise vor unerwünschten Umgebungseinflüssen geschützt verkapselt, mit elektrischen Verbindungssteckern versehen und gelangen montagefertig in den Handel.

Solarzellenmodule haben üblicherweise auf ihrer Vorderseite ein lichtdurchlässiges Frontelement (bevorzugt Glas) und weisen auf ihrer Rückseite eine schützende Komponente gegen Witterung auf. Diese Komponente kann z.B. als Klebefolie, Rückglas oder Kunststoffplatte realisiert sein. Die Kanten werden abgedichtet, um ein Eindringen von Luftsauerstoff und Flüssigkeiten zu verhindern. Innerhalb dieses schützenden Sandwichaufbaus befinden sich neben den eigentlichen Solarzellen auch die stromführenden Leiterbahnen und weitere elektronische Bauelemente je nach Grösse, Art und Leistung des Solarzellenmoduls. Zum Rand hin abgeschlossen wird ein Solarmodul in aller Regel durch einen Metallrahmen, über den auch die mechanische Befestigung an einer Tragstruktur erfolgen kann.

Dieser Metallrahmen muss stabil genug sein, um auf das Solarzellenmodul einwirkende Windkräfte und Schneelasten ableiten zu können, zusätzlich zum Eigengewicht des Solarmoduls und zudem unabhängig von der Einbaulage (vertikal, geneigt, horizontal).

Bis heute wurden die meisten Solarzellenmodule auf Dächern von Wohnhäusern bzw. Industriegebäuden montiert, sowohl auf geneigten wie auch auf Flachdächern. Häufig werden die Solarzellenmodule nach Süden ausgerichtet und so geneigt, dass die Energieausbeute im Jahresdurchschnitt optimiert wird. Jedoch gewinnt die Montage von Solarzellenmodulen an Fassaden an Bedeutung.

Durch die Montage auf Dachflächen bedingt, werden Solarzellenmodule in ihrer Leistung gemindert, wenn sie verschmutzen bzw. durch Laub und Schnee (teil-)verdeckt werden. Eine Montage an einer Hausfassade bietet demgegenüber Vorteile: Anfallender Schmutz bleibt weniger liegen und Schnee ist ebenfalls kein Problem. Wird ein Solarzellenmodul zudem als Teil einer vorgehängten, hinterlüfteten Fassade realisiert, wird aus einer rein passiven Gebäudehülle eine in Teilen aktive, energieerzeugende Fläche.

Um diese Vorteile ohne zu hohen Aufwand nutzen zu können, müssen mehrere Voraussetzungen erfüllt werden: Ein Solarzellenmodul muss sicher gehalten werden, um den bereits erwähnten Stabilitätsanforderungen gerecht zu werden. Die Befestigung über Schrauben, Niete oder andere Befestigungsmittel darf nur an bestimmten Stellen des Metallrahmens erfolgen, um eine Beschädigung des oben beschriebenen Sandwiches zu verhindern. Denn dadurch könnten Feuchtigkeit und Sauerstoff zu den eigentlichen Zellen gelangen und dort Oxidation oder Kurzschlüsse verursachen. Deswegen sind solche Befestigungspunkte oft bereits herstellerseitig vorgeschrieben bzw. vorbereitet. Drittens sollte eine Halterung mit überschaubarem Aufwand zu lösen sein, falls eines der Module in einer Fassade defekt oder beschädigt wird.

### STAND DER TECHNIK

Es sind im Stand der Technik verschiedene Lösungen für dieses Problem vorgesehen, wie vom Hersteller im Rahmen um das Solarzellenmodul vorgesehene Befestigungsöffnungen (Löcher, Langlöcher), Laschen oder ähnliche Anschlagpunkte. Diese bedingen allerdings, dass die eigentliche Fassadenunterkonstruktion auf die Lage der vorgeschriebenen Befestigungspunkte Rücksicht nimmt. Die Fassade muss also planerisch auf den vorgesehenen Typ, die Grösse und die Befestigungsart der Solarzellenmodule angepasst werden.

Die unten beschriebene Erfindung greift auf das Grundprinzip einer Haltekonstruktion aus zwei identisch geformten, invertiert zueinander angeordneten und ineinander greifenden Profilen zurück. Dies wurde beispielsweise in seinen Grundzügen in der Schrift DE 93 08 171.5 gezeigt. Ein bevorzugt als Strang gepresstes Profil wird horizontal einer Unterkonstruktion befestigt um als Aufnahme zu wirken. Ein Stück desselben Profils kann, um 180° gedreht, formschlüssig in die Aufnahme eingehängt werden.

Dokument DE 10 2011 084213 A1 beschreibt eine Klemmanordnung gemäß dem Oberbegriff des Anspruchs 1.

Die Aufgabe der Erfindung besteht darin, eine Halterung vorzuschlagen, die am Rahmen des Solarzellenmoduls vorgesehene Befestigungspunkte nicht benötigt, leicht anzubringen und zu lösen ist und in Bezug auf die tragende Unterkonstruktion flexibel handhabbar ist.

### BESCHREIBUNG DER ERFINDUNG

Diese Aufgabe wird durch eine Klemmanordnung gemäss den Merkmalen des unabhängigen Anspruchs 1 gelöst. Ferner wird eine Montageanordnung an einer Fassade beschrieben. Die Unteransprüche beschreiben jeweils Varianten und Ausführungsbeispiele.

Eine erfindungsgemässe Klemmanordnung für ein Solarmodul umfasst eine Baugruppe mit zumindest einer im Wesentlichen C-förmigen, längsausgedehnten Führungsschiene der Länge s und einer ersten und einer zweiten Halterung, die die Klemmbefestigung erlauben. Um eine hohe Flexibilität beim Einsatz der vorgeschlagenen Klemmanordnung mit verschieden grossen Solarzellenmodulen zu erlauben und gleichzeitig die Befestigung an der Fassade möglichst wenig sichtbar zu machen, wird die Länge s der Führungsschiene kleiner gewählt als die Ausdehnung des Solarzellenmoduls an der Stelle, wo es geklemmt werden soll. Die Halterungen werden an den Längsenden der Führungsschiene angeordnet und im Innenraum der Führungsschiene befestigt. Mit Innenraum ist dabei die Höhlung oder Kavität gemeint, die durch die C-Form vorgegeben ist.

Die C-Form kann wie im genannten Stand der Technik, als ein Hohlkasten-ähnliches, im Querschnitt einseitig offenes Profil realisiert werden. Die Randbereiche dieser Öffnung werden im Folgenden auch als Endabschnitte bezeichnet werden.

Die beiden Halterungen sind im Wesentlichen L-förmig ausgebildet, also grundsätzlich in Form eines Winkels. Der erste Schenkel des Winkels besitzt einen ersten, ausgedehnten, geraden Abschnitt der Länge l, der Breite b und Stärke t. Der zweite Schenkel weist einen zum ersten Schenkel abgewinkelten, zweiten Abschnitt auf, der zudem am offenen Ende einen Greifabschnitt aufweist. Dieser ist so dimensioniert, dass er den Rahmen eines Solarmoduls formschlüssig umgreifen kann. Diese Auslegung bewirkt, dass der Greifabschnitt masslich und kräftemässig den Rahmen sicher umgreifen und halten kann.

Diese beiden Halterungen und die Führungsschiene weisen Öffnungen auf für Befestigungselemente wie Schrauben oder Niete, die es erlauben, die Halterungen an der Führungsschiene in einer gesicherten Position zu fixieren.

Erfindungsgemäss wird im Innenraum der Führungsschiene eine Führung vorgesehen, die den ersten Abschnitt (Schenkel) der Halterungen aufnehmen kann. Mit Führung ist dabei im technisch üblichen Verständnis eine Vorrichtung gemeint, in der ein Bauteil in mindestens einer Raumrichtung beweglich ist, aber in anderen Raumrichtungen begrenzt wird.

Dazu wird die Klemmanordnung, speziell die vorgesehene Führung, so ausgebildet, dass sie im Wesentlichen zwei U-förmige Rillen aufweist, die voneinander beabstandet angeordnet sind und deren Öffnungen aufeinander zu weisen. Die U-Form besteht hierbei wie üblich aus zwei im Wesentlichen geraden, begrenzenden Seitenwänden und einem verbindenden Knie dazwischen, das den Rillenboden bildet.

Um die ersten Abschnitte der Führungsschiene (längs-)verschieblich aufzunehmen und führen zu können, werden die Dimensionen der Führung so gewählt, dass jede der Rillen eine Weite w und die Rillen zueinander einen Abstand d aufweisen, gemessen von Rillenboden zu Rillenboden. Die Weite w der Rillen muss also etwas grösser als die Stärke t der ersten Abschnitte gewählt werden, damit etwas Spiel verbleibt. Dasselbe gilt für den Abstand d, er wird etwas grösser gewählt als die Breite b des ersten Abschnitts (Schenkels) der ersten bzw. zweiten Halterung.

Erfindungsgemäß wird eine erste Seitenwand für jede der beiden U-förmigen Rillen gemeinsam durch eine Aussenwand der Führungsschiene gebildet.

Die zweite Seitenwand wird jeweils ausgebildet als separater, rippenförmiger Vorsprung der Höhe h, der in parallelem Abstand w zur ersten Seitenwand angeordnet ist. Bevorzugt wird diejenige Aussenwand der Führungsschiene als erste Seitenwand gewählt, die in etwa die Mitte der C-Form bildet.

Die Dimensionen der Führung und speziell der zweiten Seitenwände lässt sich wie folgt beschreiben: w < h < 5w, mit anderen Worten: Die Höhe der zweiten Seitenwand wird knapp bemessen, mindestens so hoch wie die Rille breit ist und bevorzugt höchstens das Fünffache der Weite w. Für die Funktion der Führung ist das ausreichend. Da die Führung aus zwei gegenüberliegend angeordneten Rillen besteht und keine zwingende Notwendigkeit besteht, den ersten Abschnitt der ersten bzw. zweiten Halterung in einem vollständig umschliessenden Schlitz zu führen, kann als weitere bevorzugte Bedingung angeben werden, dass die doppelte Höhe der zweiten Seitenwand (wesentlich) kleiner sein soll als der Abstand d der Rillen, d. h. 2h < < d. Wie oben bereits erwähnt, gilt für den Abstand d, die Öffnung der Führung, dass d etwas grösser gewählt wird als die Breite b des ersten Abschnitts (Schenkels) der ersten bzw. zweiten Halterung, mathematisch d <≈ b.

Die Position der Halterungen, wenn sie wie vorgesehen in der Führung angeordnet sind, kann relativ zur Führungsschiene mit Hilfe von Befestigern gesichert werden. Diese können durch sich überlappende Öffnungen in der Führungsschiene wie auch in den Halterungen durchgesteckt bzw. darin angeordnet werden. Dabei ist es von Vorteil, wenn die erste Halterung ein Langloch aufweist, weil damit eine relative Verstellbarkeit zwischen Führungsschiene und erster Halterung ermöglicht wird.

Erfindungsgemäß weist die Führungsschiene eine erste Öse auf, die sich rechtwinklig von der ersten Seitenwand in den Innenraum der Führungsschiene erstreckt. Diese Öse wird in einem Abstand vom Ende der Führungsschiene angebracht, der grösser ist als die Länge l des ersten Abschnitts der Halterung. Damit wird gewährleistet, dass die erste Öse nicht als Anschlag für die in die Führung eingeschobene Halterung wirkt. Realisiert werden kann eine solche Öse beispielsweise als aufgesetztes Bauteil oder auch als teilweise ausgestanztes und umgebogenes Teil der Seitenwand der Führungsschiene.

Als Gegenstück zur ersten Öse wird an der ersten Halterung eine zweite Öse realisiert, die an der Schmalseite des ersten Abschnitts gegenüber dem Greifabschnitt angeordnet wird.

Wird die Halterung in die Führung eingeschoben, geschieht das also mit der zweiten Öse voran. Die zweite Öse erstreckt sich dazu rechtwinklig von der Ebene des ersten Abschnitts weg und weist in den Innenraum, wenn die erste Halterung ordnungsgemäss in der Führung der Führungsschiene angeordnet ist. Dann wird auch die Sichtlinie durch die erste und zweite Öse parallel zur Ebene der ersten Seitenwand der Führungsschiene verlaufen.

Der Zweck der Ösen besteht darin, dass die erste und zweite Öse Anschlagpunkte bilden können für eine Feder, die, bei korrekt in der Führung installierter erster Halterung, eine Zugkraft ausübt zwischen der Führungsschiene und der ersten Halterung. Dadurch wird die Halterung grundsätzlich in die Führung hineingezogen, wodurch eine Zugkraft auf den Greifabschnitt wirkt. Der Fachmann kann die hier beschriebene Feder als Spiralfeder mit Endhaken für die Ösen realisieren oder durch äquivalente, elastische Spannelemente.

Das Vorsehen der Ösen und das Anbringen der Feder wurden für die erste Halterung beschrieben, weil eine Spannvorrichtung pro Klemmvorrichtung üblicherweise ausreicht. Die zweite Halterung kann z.B. über eine Auswahl vorgefertigter Löcher voreinstellbar, aber unelastisch mit der Führungsschiene verbunden werden. Die Klemmkraft würde im beschriebenen Fall allein durch die Spannvorrichtung zwischen der ersten Halterung und der Führungsschiene erbracht. Durch entsprechendes Vorsehen eines Langlochs im ersten Abschnitt der ersten Halterung in Verbindung mit einer einzelnen Durchgangsbohrung in der Führungsschiene kann eine weitere Sicherungsmöglichkeit vorgesehen werden. Bei der Vormontage würde hier eine losen Schraube/Mutter Verbindung vorgesehen. Nachdem ein Solarzellenmodul in einer so vorbereiteten Klemmanordnung eingebracht wurde, kann durch Anziehen der losen Schraube/Mutter Verbindung die Klemmanordnung in Endposition fixiert werden.

Die hier beschrieben Führungsschiene lässt sich als extrudiertes Aluminium-Profil mit einem im Wesentlichen gleichförmigen Querschnitt fertigen, ebenso wie die unten weiter beschriebene Tragschiene. Ösen und Durchtrittsöffnungen können in weiteren Bearbeitungsschritten hinzugefügt werden.

Die Halterungen lassen sich ebenfalls in Aluminium als Stanz- und Biegeteile realisieren oder alternativ aus dünnem Stahlblech durch Stanzen und Abkanten.

Eine Zusammenstellung aus Klemmanordnung, Solarmodul und Tragschiene wird im Folgenden als Montageanordnung beschrieben. Diese ist vor allem für den Gebrauch an Fassaden vorgesehen, aber nicht auf diese eingeschränkt. Auch von der Vertikalen abweichende Anordnungen lassen sich damit realisieren.

Eine Montageanordnung mit einem Solarmodul umfasst die oben aufgeführte Klemmanordnung und eine Tragschiene. Die Tragschiene ist darauf ausgelegt, horizontal an einer lastabtragenden Unterkonstruktion befestigt zu werden. Mit "Unterkonstruktion" werden üblicherweise Tragwerke bezeichnet, die in einem gewissen Abstand zu bzw. an einer tragenden Gebäude(aussen)wand befestigt werden und als Aufnahme für einzuhängende Fassadenelementen dienen. Diese bilden dann die sichtbare Fassade. Die Kombination aus Unterkonstruktion und Fassadenverkleidung wird dann als Gebäudehülle bezeichnet.

Zur Montage wird die Klemmanordnung in ihren Abmessungen (l, b, t, h, s...), besonders im Bereich des Greifabschnittes so dimensioniert, dass sie den Randbereich oder Rahmen eines Solarmoduls sichernd umgreifen kann. Für die Montage vorteilhaft ist, wenn sowohl die Führungsschiene wie auch die Tragschiene einen im Wesentlichen C-förmigen Querschnitt aufweisen. Die offenen Endabschnitte des C-Profils sind vorteilhaft so ausgeformt, dass sie verriegelnd ineinander greifen, wenn die Führungsschiene in die Tragschiene eingehängt wird, wobei die Öffnungen des C aufeinander ausgerichtet sind.

Besonders vorteilhaft ist, wenn der erste und zweite Endabschnitt der Führungsschiene und der erste und der zweite Endabschnitt der Tragschiene unterschiedlich ausgebildet sind, aber der erste Endabschnitt der Tragschiene dem ersten Tragabschnitt der Führungsschiene nachgebildet ist und der zweite Endabschnitt der Tragschiene dem zweiten Tragabschnitt der Führungsschiene. Wie im Stand der Technik können diese Endabschnitte paarweise gleich ausgeführt sein oder soweit kompatibel, dass das beschriebene Ineinandergreifen und Verriegeln erzielt werden kann. Verriegeln ist hierbei nicht als irreversibler Vorgang gemeint, sondern als eine durch z.B. das Eigengewicht auf Dauer gesicherte, jedoch lösbare Verbindung.

Eine Montageanordnung der beschriebenen Art kann natürlich bei besonders grossen oder schweren Solarpaneelen zur Sicherung des Solarpanels zwei (oder mehr) parallel versetzt angeordnete Führungsschienen vorsehen. Diese werden in eine entsprechende Anzahl von Tragschienen eingehängt.

Ein Fachmann wird, je nach Aufgabenstellung oder Vorschrift, die vorgängig beschriebene Klemmanordnung bzw. Montageordnung um Sicherungsmittel ergänzen. So kann die Position des Greifabschnitts am Rahmen eines Solarzellenmoduls durch eine Sicherungsschraube oder eine Vernietung gesichert werden. Ebenso ist es möglich, die Verbindung von Führungsschiene und Tragschiene mit einer Sicherungsschraube zu sichern. So ein Bedarf kann entstehen, wenn an einer Fassade hohe Windlasten zu erwarten sind.

### BESCHREIBUNG DER FIGUREN

Die Erfindung wird nun mit Bezug auf die begleitenden Zeichnungen anhand bevorzugter Ausführungsformen beispielhaft erläutert.
Figur 1 zeigt eine Gegenüberstellung einer Tragschiene 200 und einer Führungsschiene 110.
Figur 2 zeigt eine Tragschiene 200 und eine Führungsschiene 110 im eingehängten, verriegelten Zustand.
Figur 3 ist eine 3D-Ansicht einer Führungsschiene 110 mit eingeschobenen Halterungen 120 und 130 von der Panel-Seite.
Figur 4 zeigt eine Führungsschiene 110 ohne Halterungen.
Figur 5 zeigt eine erste Halterung 120.
Figur 6 zeigt eine zweite Halterung 130.
Figur 7 zeigt eine Draufsicht auf ein Endstück einer Führungsschiene 110.
Figur 8 zeigt eine Zusammenstellung von Führungsschiene 110 und erster Halterung 120, verbunden via Feder 250.

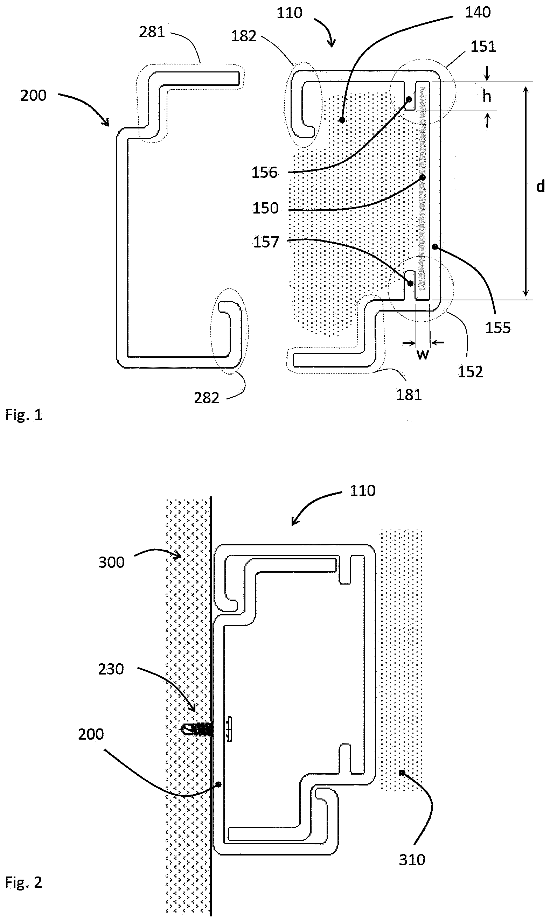

Figur 1 zeigt eine Tragschiene 200 (links) und eine Führungsschiene 110 (rechts). Die Darstellung entspricht einem Zustand vor dem Einhängen und Verriegeln der beiden Profile. Ein Solarmodul bzw. eine Unterkonstruktion sind in dieser Darstellung weggelassen. Bei der Tragschiene 200 ist der erste Endabschnitt (oben) 281 als gewinkeltes Element ausgeführt, der andere Endabschnitt 282 (unten) ist hakenförmig gestaltet. Die C-Form der Tragschiene 200 öffnet sich in der Zeichnung nach rechts, bei der Führungsschiene 110 nach links. Die Öffnung zwischen den Endabschnitten 181 und 182 und das im Wesentlichen kastenförmige Profil der Führungsschiene 110 bilden einen Innenraum 140. Ein Teil dieses Innenraums 140 wird eingenommen von der Führung 150, die hier als vertikales Element markiert ist. Dieser Raum würde im montierten Zustand vom ersten Abschnitt 121 bzw. 131 einer Halterung 120 bzw. 130 eingenommen (nicht explizit gezeigt). Die Führung wird hier im Ausführungsbeispiel gebildet durch zwei einander zugewandte U-förmige Rillen 151 und 152, die im Abstand d so gegenüber stehend angeordnet sind, dass ihre Öffnungen fluchten. Die im Bild untere Rille 152 besteht aus einer linken (zweiten) Seitenwand 157 und der Aussenwand der Führungsschiene 110, die die rechte (erste) Seitenwand 155 bildet. Der Abstand zwischen den Seitenwänden ist mit w markiert. Die zweite (obere) Rille 151 nutzt dieselbe Aussenwand als Seitenwand 155, hat aber eine eigene zweite Seitenwand 156. Die Höhe h der beiden Seitenwände ist hier gleich gewählt. Dies ist fertigungstechnisch vorteilhaft, aber nicht zwingend. Die Höhe h wird üblicherweise so gewählt, dass die Funktion der Führung 150 gewährt ist. Eine zu hohe Ausführung (grosses h) ist der Stabilität der zweiten Seitenwände 156 und 157 nicht unbedingt dienlich und erhöht die Gefahr des Verklemmens eines eingeschobenen ersten Halterungsabschnitts.

Der Abstand d, gemessen von Rillenboden bis Rillenboden, korrespondiert in den oben genannten Grenzen mit der Breite b eines Halterungsabschnitts.

Weiterhin vorteilhaft ist es, die Profile von Tragschiene und Führungsschiene einerseits, wie auch Führungsschiene und der Breite des ersten Abschnitts 121, 131 der Halterung 120, 130 so aufeinander abzustimmen, dass die Gestaltung der Führung 150 nicht zu komplex wird. Dabei spielt auch die Grösse und das Gewicht des zu halternden Solarzellenmoduls eine wichtige Rolle.

Figur 2 zeigt eine Tragschiene 200 und eine Führungsschiene 110 verbaut in einem Querschnitt. Auf die Darstellung einer Halterung wurde hierbei verzichtet. Die Lage eines Solarmoduls 130 ist angedeutet, ebenso die Position einer Unterkonstruktion 300, an der die Tragschiene 200 hier mit Hilfe einer Schraube 230 befestigt ist. Die Unterkonstruktion kann z. B. aus Holz, Aluminium oder Stahlprofilen bestehen. Die Art und Dimensionierung dieses Tragwerks wird durch Bauvorschriften und Sicherheitsvorgaben bestimmt und entsprechend ausgeführt. Figur 2 zeigt insbesondere, wie die (hier nicht nochmals markierten) Endabschnitte 181, 182, 282, 281 ineinander greifen.

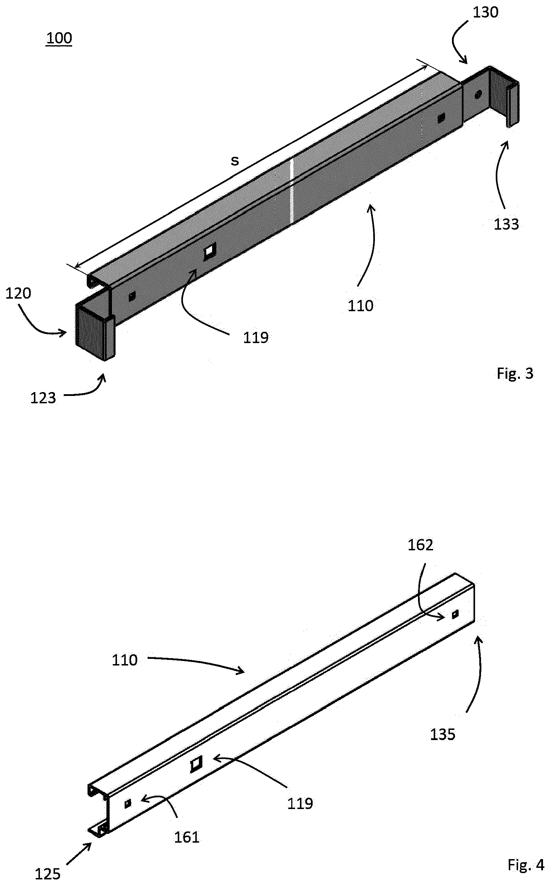

Figur 3 zeigt in schräger 3-D-Draufsicht eine Führungsschiene 110 mit eingeschobenen Halterungen 120 und 130 von vorne. Die sich gegenüber stehenden, zu einer Klammer ergänzenden Greifabschnitte 123, 133 bilden den Aufnahmeraum für ein Solarpanel oder bedarfsweise auch ein ähnlich dimensioniertes Fassadenverkleidungselement. Mit 119 ist eine dreiseitige Ausstanzung markiert. Die damit ausgebildete Zunge wird im Herstellprozess mit einer Öffnung als Öse versehen und rechtwinklig (in der Zeichnung nach hinten) umgebogen. Die Länge s der Führungsschiene 110 wird beidseitig durch die Halterungen 120 und 130 überragt, damit bleibt die Führungsschiene 110 von der (vorgesehenen) Panelseite her unsichtbar.

Figur 4 zeigt eine Führungsschiene 110 ohne montierte Halterungen. Es wird verwiesen auf die Lage der offenen Längsenden 125, 135. Die Öffnungen 161 und 162 sind als viereckige Ausstanzungen gezeigt, dies erlaubt die Verwendung von verdrehsicheren Schlossschrauben zur Sicherung der Halterungen an der Führungsschiene.

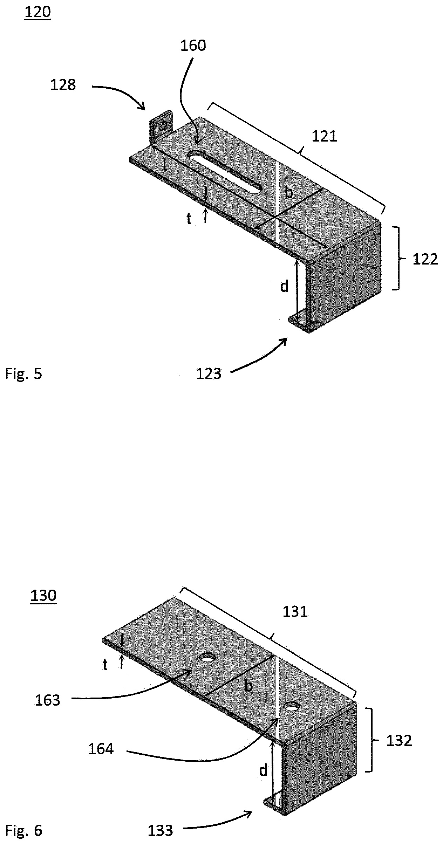

Figur 5 zeigt die erste L-förmige Halterung 120. Sie besteht aus dem ersten Schenkel 121 (erster Abschnitt) und dem zweiten Abschnitt 122, der rechtwinklig dazu angeordnet ist und in den Greifabschnitt 123 übergeht. Die Griffweite d entspricht der Rahmentiefe eines zu halternden Solarpanels. Der erste Schenkel weist die Dimensionen l x b auf bei einer Stärke t Die Stärke t und Breite b ist bei beiden Halterungen zwingend gleich, weil beide dieselbe Führung 150 in der Führungsschiene 120 benutzen. Der erste Abschnitt 121 ist mit einem Langloch 160 ausgestattet. Zudem ist am offenen Ende des ersten Abschnittes 121 die zweite Lasche 128 angebracht. Sie ist ebenfalls als gestanztes und umgebogenes Element dargestellt.

Figur 6 zeigt die zweite Halterung 130, diese ist gegenüber der ersten Halterung 120 einfacher ausgeführt. Statt eines Langlochs weist der erste Abschnitt 131 in der gezeigten Ausführungsform zwei normale Bohrungen 163 und 164 auf. Eine Öse ist nicht vorgesehen. Der Greifabschnitt 133 ist identisch ausgeführt wie bei der ersten Halterung 120 (Figur 5).

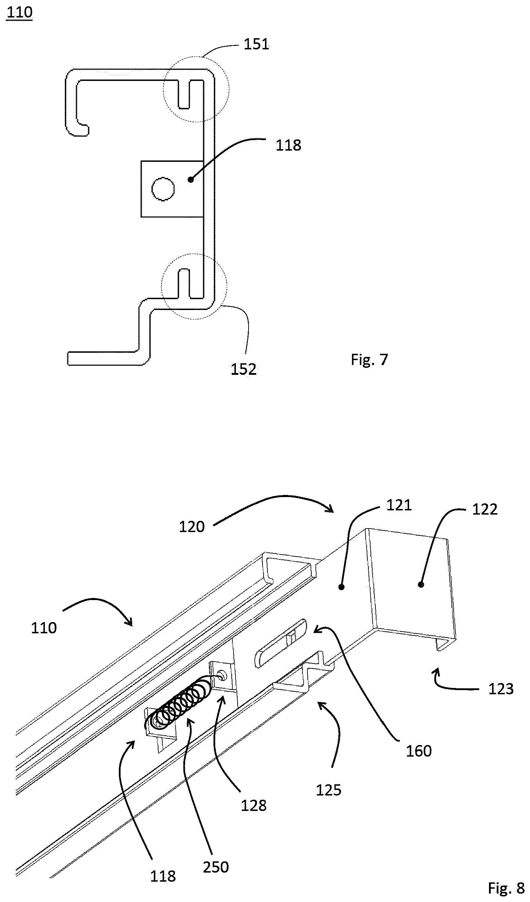

In Figur 7 wird eine Draufsicht auf einen Querschnitt bzw. Längsende 125 einer Führungsschiene 110 gezeigt. Markiert ist die Lage einer ersten Öse 118 in der Tiefe bzw. im Verlauf des Profils. Die Lage der Rillen 151 und 152 ist ebenfalls hervorgehoben.

Figur 8 zeigt abschliessend eine Zusammenstellung von Führungsschiene 110 und Halterung 120 in perspektivischer Ansicht. Eine Halterung 120 ist mit dem ersten Abschnitt 121 in der Führung 150 (nicht markiert) eingeschoben. Der zweite Abschnitt 122 mit seinem Greifabschnitt 123 überragt das Längsende 125 der Führungsschiene 110. Die beiden Ösen 118 und 128 sind durch eine eingehängte Feder 250 verbunden, die eine Zugkraft von der Führungsschiene 110 auf die Halterung 120 ausübt. Das Langloch 160 erlaubt einen Blick auf ein in der Führungsschiene eingebrachte, quadratische Öffnung 161 (selbst nicht markiert).

Abschliessend soll kurz ein Montagevorgang exemplarisch beschrieben werden: Eine entsprechend den Vorgaben für ein Solarzellenpaneel dimensionierte Führungsschiene 110 und zwei Halterungen 120, 130 werden vorbereitet. Die zweite Halterung wird wie in Figur 3 rechts gezeigt eingeschoben und via Öffnung 162 mit Öffnung 163 oder 164 verschraubt. Anschliessend wird eine erste Halterung 120 in das andere Ende der Führungsschiene 110 in die Führung 150 eingeschoben. Eine lockere Schraube-Mutter Verbindung durch das Langloch 160 und die Öffnung 161 wird vorbereitet (je nach Lastfall nicht zwingend). Anschliessend kann eine Feder 250 wie in Figur 8 gezeigt eingehängt werden. Bei bekannten Massen des zu montierenden Solarzellenmoduls kann diese Vormontage beim Hersteller bzw. Monteur vorgenommen werden.

Anschliessend kann das Solarzellenmodul in die Klemmanordnung eingesetzt werden. Hierzu wird bevorzugt das Ende der Klemmanordnung mit der zweiten, fixierten Halterung am Rahmen des Solarzellenmoduls eingehängt. Die erste Halterung wird entgegen der Zugfederkraft aus der Führung soweit heraus gezogen, bis der Greifabschnitt über das andere Rahmenteil geführt werden kann. Danach wird die Feder soweit entspannt, bis der Greifabschnitt formschlüssig am Rahmen anliegt. Die Klemmanordnung liegt damit am Solarmodul an. Je nach Vorgabe kann der Greifabschnitt auf seiner Innenseite, mit der er den Rahmen berührt, auch mit Dämpfungsstreifen / Ausgleichselementen / Klebemitteln versehen werden.

Je nach Anforderung kann noch eine zweite Klemmanordnung auf dieselbe Weise am Solarzellenmodul angebracht werden. Beide Klemmanordnungen können noch in der Position feinjustiert werden, z.B. durch Verwenden einer Positionslehre am Rahmen.

Eine höhere Befestigungsqualität lässt sich erreichen, wenn die vorerwähnte Schraubverbindung durch Langloch 160 und Öffnung 161 angezogen wird. Die durch die Wahl der Feder vorbestimmte Klemmkraft und Position wird auf diese Weise fixiert. Je nach Vorgaben können zusätzliche mechanische Sicherungen zwischen dem Greifabschnitt und dem Rahmen des Solarpaneels erfolgen, z.B. durch Kleben oder Schrauben.

Besonders vorteilhaft ist bei der erfinderischen Klemmanordnung, dass sie aufgrund ihrer

Bauweise von einem einzelnen Monteur auf die beschrieben Art und Weise angebracht werden kann. Wegen der Vormontage kann auf der Baustelle - bei existierender Unterkonstruktion - die Montage der Paneele durch einfaches Einhängen der Führungsschiene in die Tragschiene erfolgen.

## Patentansprüche

1. Eine Klemmanordnung (100) für ein Solarmodul umfasst eine Baugruppe mit zumindest einer im Querschnitt im Wesentlichen C-förmigen, längsausgedehnten Führungsschiene (110) der Länge s und einer ersten und einer zweiten Halterung (120, 130), die
- an den Längsenden (125, 135) der Führungsschiene (110) angeordnet und
- in einem Innenraum (140) der Führungsschiene (110) befestigt sind; wobei jede der Halterungen (120, 130) im Wesentlichen L-förmig ausgebildet ist;
- mit einem ersten, ausgedehnten, geraden Abschnitt (121, 131) der Länge l und der Breite b und
- einem dazu abgewinkelten, zweiten Abschnitt (122, 132), der einen Greifabschnitt (123, 133) aufweist, dazu ausgelegt, den Rahmen eines Solarmoduls formschlüssig zu umgreifen; wobei
beide Halterungen (120, 130) und die Führungsschiene (110) Öffnungen (160-164) aufweisen für Befestigungselemente, die es erlauben die Halterungen an der Führungsschiene in einer gesicherten Position zu fixieren, und
der Innenraum (140) der Führungsschiene (110) eine Führung (150) aufweist zur Aufnahme und verschieblichen Führung der ersten Abschnitte (121, 131) der Halterungen (120, 130) in der Führung (150); wobei
die Führung (150) im Wesentlichen zwei U-förmige Rillen (151, 152) aufweist, die
- voneinander beabstandet angeordnet sind und
- jeweils eine Weite w und einen Abstand d von Rillenboden zu Rillenboden aufweisen,
**dadurch gekennzeichnet, dass**
- die Öffnungen der U-förmigen Rillen (151, 152) aufeinander zu weisen und
- eine erste Seitenwand (155) der beiden U-förmigen Rillen (151, 152) gemeinsam durch eine Aussenwand der Führungsschiene (110) gebildet wird und
- die zweite Seitenwand (156, 157) jeweils ausgebildet wird als separater, rippenförmiger Vorsprung der Höhe h, der in parallelem Abstand w zur ersten Seitenwand (155) angeordnet ist;
und die Führungsschiene (110)
- eine erste Öse (118) aufweist, die sich rechtwinklig von der ersten Seitenwand (155) in den Innenraum (140) der Führungsschiene (110) erstreckt, und die erste Halterung (120)
- eine zweite Öse (128) aufweist, die an der Schmalseite des ersten Abschnitts (121) gegenüber dem Greifabschnitt (123) angeordnet ist; und sich rechtwinklig von der Ebene des ersten Abschnitts (121) weg erstreckt und in den Innenraum (140) weist, wenn die erste Halterung (120) ordnungsgemäss in der Führung (150) der Führungsschiene (110) angeordnet ist;
wobei
- die erste (118) und zweite Öse (128) Anschlagpunkte sind für eine Feder (250), die, bei korrekt in der Führung (150) installierter erste Halterung (120), eine Zugkraft ausübt zwischen der Führungsschiene (110) und der ersten Halterung (120); wodurch eine Zugkraft auf den Greifabschnitt (123) wirkt.

2. Klemmanordnung (100) nach Anspruch 1, **dadurch gekennzeichnet, dass** für die die zweiten Seitenwände (156, 157) gilt w < h < 5 w und 2 h << d und d <≈ b

3. Klemmanordnung (100) nach Anspruch 1 und 2, **dadurch gekennzeichnet, dass** die Position der Halterungen (120, 130), wenn korrekt in der Führung (150) angeordnet, relativ zur Führungsschiene (110) gesichert werden kann mit Hilfe von Befestigern, die in entsprechend sich überlappenden Öffnungen (160-164) sowohl in der Führungsschiene (110) wie auch den Halterungen (120, 130) angeordnet werden.

4. Klemmanordnung (100) nach Anspruch 1 bis 3, **dadurch gekennzeichnet, dass** die erste Halterung (120) ein Langloch (160) aufweist.

5. Klemmanordnung (100) nach Anspruch 1 bis 4, **dadurch gekennzeichnet, dass** die Sichtlinie durch die erste (118) und zweite Öse (128) parallel zur Ebene der ersten Seitenwand (155) der Führungsschiene (110) verläuft.

6. Klemmanordnung (100) nach Anspruch 1 bis 5, **dadurch gekennzeichnet, dass** die Führungsschiene (110) als extrudiertes Aluminium-Profil gefertigt wird mit einem im Wesentlichen gleichförmigen Querschnitt.

7. Montageanordnung für ein Solarmodul (310) mit einer Klemmanordnung (100) nach Anspruch 1 bis 6, und einer Tragschiene (200),
wobei die Tragschiene (200) ausgelegt ist, horizontal an einer lastabtragenden Unterkonstruktion (300) befestigt zu werden; und
die Klemmanordnung (100) so dimensioniert ist, den Randbereich oder Rahmen eines Solarmoduls (310) sichernd zu umgreifen;
wobei sowohl die Führungsschiene (110) wie auch die Tragschiene (200) einen im Wesentlichen C-förmigen Querschnitt aufweisen; und
wobei die offenen Endabschnitte (181, 182, 281, 282) des C so ausgeformt sind, dass sie verriegelnd ineinander greifen, wenn die Führungsschiene (110) in die Tragschiene (200) eingehängt wird, wobei die Öffnungen des C aufeinander ausgerichtet sind.

8. Montageanordnung nach Anspruch 7, **dadurch gekennzeichnet, dass** zur Sicherung eines Solarpanels (310) zwei parallel versetzt angeordnete Führungsschienen (110) vorgesehen sind, die in zwei entsprechende Tragschienen (200) eingreifen.

## Claims

1. Clamping arrangement (100) for a solar module comprises an assembly having at least one longitudinally extended guide rail (110) with a substantially C-shaped cross-section and a length s, and a first and a second holder (120, 130)
- arranged at the longitudinal ends (125, 135) of the guide rail (110) and
- are fastened in an interior space (140) of the guide rail (110); wherein each of the holders (120, 130) is substantially L-shaped;
- having a first, extended, straight section (121, 131) of length l and width b and
- a second section (122, 132) angled thereto, which has a gripping section (123, 133) designed to form-fit around the frame of a solar module; wherein
both holders (120, 130) and the guide rail (110) have openings (160-164) for fastening elements that allow the holders to be fixed to the guide rail in a secure position, and
the interior space (140) of the guide rail (110) has a guide (150) for accommodating and movably guiding the first sections (121, 131) of the holders (120, 130) in the guide (150); wherein
the guide (150) substantially comprises two U-shaped grooves (151, 152) which
- are arranged spaced apart from each other and
- each have a width w and a distance d from groove bottom to groove bottom,
**characterized in that**
- the openings of the U-shaped grooves (151, 152) face each other and
- a first side wall (155) of the two U-shaped grooves (151, 152) is formed jointly by an outer wall of the guide rail (110) and
- the second side wall (156, 157) is formed in each case as a separate, rib-shaped projection of height h, which is arranged at a parallel distance w from the first side wall (155); and the guide rail (110)
- has a first eyelet (118) extending at right angles from the first side wall (155) into the interior space (140) of the guide rail (110),
and the first holder (120)
- has a second eyelet (128) arranged on the narrow side of the first section (121) opposite the gripping section (123); and extends at right angles away from the plane of the first section (121) and points into the interior space (140) when the first holder (120) is correctly arranged in the guide (150) of the guide rail (110);
wherein
- the first eyelet (118) and second eyelet (128) are attachment points for a spring (250) which, when the first holder (120) is correctly installed in the guide (150), exerts a tensile force between the guide rail (110) and the first holder (120); whereby a tensile force acts on the gripping section (123).

2. Clamping arrangement (100) according to claim 1, **characterized in that** w < h < 5 w and 2 h << d and d <≈ b applies to the second side walls (156, 157).

3. Clamping arrangement (100) according to claim 1 and 2, **characterized in that** the position of the holders (120, 130), when correctly arranged in the guide (150), can be secured relative to the guide rail (110) by means of fasteners which are arranged in correspondingly overlapping openings (160-164) in both the guide rail (110) and the holders (120, 130).

4. Clamping arrangement (100) according to claim 1 to 3, **characterized in that** the first holder (120) has an elongated hole (160).

5. Clamping arrangement (100) according to claim 1 to 4, **characterized in that** the line of sight through the first (118) and second eyelet (128) runs parallel to the plane of the first side wall (155) of the guide rail (110).

6. Clamping arrangement (100) according to claim 1 to 5, **characterized in that** the guide rail (110) is manufactured as an extruded aluminum profile with a substantially uniform cross-section.

7. Mounting arrangement for a solar module (310) having a clamping arrangement (100) according to claim 1 to 6, and a support rail (200), wherein the support rail (200) is designed to be attached horizontally to a load-bearing substructure (300); and
the clamping arrangement (100) is dimensioned to grip the edge area or frame of a solar module (310) in a securing manner;
wherein both the guide rail (110) and the support rail (200) have a substantially C-shaped cross-section; and
wherein the open end sections (181, 182, 281, 282) of the C are shaped so that they engage into each other in an interlocking manner when the guide rail (110) is hooked into the support rail (200), wherein the openings of the C are aligned with each other.

8. Mounting arrangement according to claim 7, **characterized in that,** for securing a solar panel (310), two guide rails (110) arranged in a parallel offset manner are provided, which engage in two corresponding support rails (200).

## Revendications

1. Dispositif de serrage (100) pour un module solaire, comprenant un module avec au moins un rail de guidage (110) sensiblement en forme de C en section qui s'étend longitudinalement, de longueur s, et des première et deuxième montures (120, 130) qui
- sont disposées aux extrémités longitudinales (125, 135) du rail de guidage (110) et
- sont fixées dans un espace intérieur (140) du rail de guidage (110),
chacune des montures (120, 130) étant sensiblement en forme de L,
- avec une première section droite étendue (121, 131) de longueur *l* et de largeur *b* et
- une deuxième section (122, 132) formant un angle avec celle-ci, qui comporte une section de prise (123, 133), conçue pour entourer le cadre d'un module solaire en engagement positif, dans lequel
les deux montures (120, 130) et le rail de guidage (110) comportent des ouvertures (160-164) pour des éléments de fixation qui permettent de fixer les montures sur le rail de guidage dans une position stabilisée, et
l'espace intérieur (140) du rail de guidage (110) comporte un guide (150) destiné à recevoir et à guider en translation les premières sections (121, 131) des montures (120, 130) dans le guide (150),
lequel guide (150) comporte deux rainures (151, 152) sensiblement en forme de U qui
- sont disposées à distance l'une de l'autre et
- présentent chacune une largeur w et une distance d de fond de rainure à fond de rainure, **caractérisé en ce que**
- les ouvertures des rainures en forme de U (151, 152) sont orientées l'une vers l'autre et
- une première paroi latérale (155) des deux rainures en forme de U (151, 152) ensemble est formée par une paroi extérieure du rail de guidage (110) et
- la deuxième paroi latérale (156, 157) est formée séparément comme une saillie en forme de nervure séparée de hauteur h qui est disposée à une distance parallèle w de la première paroi latérale (155)
et le rail de guidage (110)
- comporte un premier œillet (118) qui s'étend perpendiculairement à partir de la première paroi latérale (155) dans l'espace intérieur (140) du rail de guidage (110),
et la première monture (120)
- comporte un deuxième œillet (128) qui est disposé sur le petit côté de la première section (121) vis-à-vis de la section de prise (123) et s'écarte à angle droit du plan de la première section (121) en direction de l'espace intérieur (140) quand la première monture (120) est correctement disposée dans le guide (150) du rail de guidage (110),
- le premier œillet (118) et le deuxième (128) étant des points d'accrochage pour un ressort (250) qui, lorsque la première monture (120) est correctement installée dans le guide (150), exerce une force de traction entre le rail de guidage (110) et la première monture (120), de sorte qu'une force de traction agit sur la section de prise (123).

2. Dispositif de serrage (100) selon la revendication 1, **caractérisé en ce que** l'on a, pour les deuxièmes parois latérales (156, 157), *w* < *h* < 5 *w* et 2 *h << d* et *d <*≈ *b.*

3. Dispositif de serrage (100) selon les revendications 1 et 2, **caractérisé en ce que** la position des montures (120, 130), lorsqu'elles sont correctement disposées dans le guide (150), peut être fixée par rapport au rail de guidage (110) à l'aide de fixations qui sont disposées dans des ouvertures (160-164) dans le rail de guidage (110) ainsi que dans les montures (120, 130) qui se chevauchent de manière correspondante.

4. Dispositif de serrage (100) selon les revendications 1 à 3, **caractérisé en ce que** la première monture (120) comporte un trou oblong (160).

5. Dispositif de serrage (100) selon les revendications 1 à 4, **caractérisé en ce que** la ligne de visée à travers le premier œillet (118) et le deuxième (128) est parallèle au plan de la première paroi latérale (155) du rail de guidage (110).

6. Dispositif de serrage (100) selon les revendications 1 à 5, **caractérisé en ce que** le rail de guidage (110) est fabriqué sous la forme d'un profilé d'aluminium extrudé de section sensiblement uniforme.

7. Dispositif de montage pour un module solaire (310) munie d'un dispositif de serrage (100) selon les revendications 1 à 6 et d'un rail porteur (200),
dans lequel le rail porteur (200) et conçu pour être fixé horizontalement sur une infrastructure (300) supportant la charge et
le dispositif de serrage (100) est dimensionné de façon à entourer la région de bord ou le cadre d'un module solaire (310) pour le fixer,
dans lequel le rail de guidage (110) ainsi que le rail porteur (200) présentent une section sensiblement en forme de C et
dans lequel les sections d'extrémité ouvertes (181, 182, 281, 282) du C sont conformées de façon à se verrouiller en se mettant en prise les unes dans les autres quand le rail de guidage (110) est suspendu dans le rail porteur (200), les ouvertures du C étant orientées les unes vers les autres.

8. Dispositif de montage selon la revendication 7, **caractérisé en ce que** sont prévus, pour la fixation d'un panneau solaire (310), deux rails de guidage (110) décalés parallèlement l'un par rapport à l'autre qui se mettent en prise dans deux rails rail porteurs (200) correspondants.
